# EUROPEAN PATENT SPECIFICATION

(11) **EP 3 967 152 B1**
(45) Date of publication and mention of the grant of the patent: **29.01.2025**
(21) Application number: 20802019.8
(22) Date of filing: 08.05.2020
(51) Int. Cl.: A23L 5/00, A23L 5/10

(54) **PROCESSED FOOD AND MANUFACTURING METHOD THEREOF**
VERARBEITETES NAHRUNGSMITTEL UND VERFAHREN ZU SEINER HERSTELLUNG
ALIMENT TRAITÉ ET SON PROCÉDÉ DE FABRICATION

(30) Priority: 09.05.2019 JP 2019089060
(43) Date of publication of application: 16.03.2022
(73) Proprietor: Nisshin Seifun Welna Inc., Tokyo 101-8441 (JP)
(72) Inventor: ITO, Takashi, Tokyo 103-8544 (JP); TAKASU, Ryosuke, Tokyo 103-8544 (JP); TSUJI, Akito, Tokyo 103-8544 (JP); SHIGEMATSU, Toru, Tokyo 103-8544 (JP); HIWATASHI, Souichiro, Tokyo 103-8544 (JP)
(74) Representative: Forstmeyer, Dietmar
(86) International application number: PCT/JP2020/018624
(87) International publication number: WO 2020/226171

(56) References cited:
- WO-A1-2014/209551
- DE-A1- 3 902 415
- JP-A- 2008 125 417
- JP-A- 2016 065 198
- JP-A- 2016 523 081
- JP-A- H10 262 546
- US-A1- 2015 181 907

## Description

### Technical Field

This invention relates to a cooked food that visually mimics smoked or char-grilled food in spite of not having been smoked or char-grilled, and a method for producing said cooked food.

### Background Art

Smoking is the process of exposing food to smoke (volatile component) generated by heating wood chips. Smoking imparts a distinctive flavor and appearance to food. At the same time, smoking evaporates the water content of the food and deposits an antimicrobial substance present in the wood on the food, whereby microorganisms in the food decrease to improve the food preservability. Smoked foods exemplified by smoked bacon, smoked ham, and smoked salmon are distributed also as preserved food with popularity. Smoked foods have a lightly browned, dark-shaded appearance, which is characteristic of foods that have been exposed to smoke. This appearance characteristic of smoked food stimulates the viewer's appetite, making a contribution to increasing the preference therefor. On the other hand, a smoking process requires as long as several hours to several tens of hours and therefore unsuitable for foods that are to be produced in mass quantities. Patent literature 1 listed below discloses a smoking apparatus enabling completion of smoking in a reduced time, which includes a smoke generating means and a high-frequency heating means. However, a problem with this apparatus is that a food being treated is liable to be locally overheated in high-frequency heating, resulting in scorching or uneven heating.

Hence, studies have been directed to develop techniques for imparting, to a food, qualities that mimic smoked food without conducting the smoking process. For example, a method in which a food is dipped in liquid smoke or wood vinegar is known. The food treated by this method acquires a similar flavor to a smoked food but retains the original appearance, so that an eater has a feeling of strangeness because of the gap between the flavor and the appearance.

In recent years, char-grilling has attracted attention, in which food is grilled over charcoal fire. Char-grilled food is well-liked because of the following; for one thing, it has been heated gently from its surface to the deep inside by far infrared radiation from charcoal and thereby has its taste enhanced; and secondly, it has been exposed to smoke given off upon contact of the fat dripped from the food being heated with charcoal and is thereby given a distinctive flavor and nicely browned. Especially, the nicely browned exterior stimulates the viewer's appetite similarly to the dark-shaded appearance characteristic of smoked food, making a contribution to increasing the preference for char-grilled food. However, too much browning can cause reduction in qualities of char-grilled food, such as a burnt smell. It is not easy to control the degree of cooking on char fire so as to nicely brown the food.

With respect to the technique for improving food appearance, Patent literature 2 discloses a coating containing an emulsifier and a naturally occurring antioxidant. The literature purports that the coating is capable of making deep-fried food with better crispness and color tone. Examples of the naturally occurring antioxidant recited in this literature include oolong, cacao, sesame, and soybeans. The color tone of the coating the technique of Patent literature 2 aims for is the very color like deep-fried food, i.e., the color tone of ordinary deep-fried food but not the special color tone characteristic of smoked or char-grilled food. Patent literature 2 has no mention of imparting to deep-fried food an appearance like smoked or char-grilled food.

### Citation List

### Patent Literature

Patent literature 1: JP 2004-20046A
Patent literature 2: JP 2002-27933A

### Summary of Invention

An object of the invention is to provide a cooked food that visually mimics smoked or char-grilled food in spite of not having been smoked or char-grilled.

Another object of the invention is to provide a method for producing a cooked food that visually mimics smoked or char-grilled food in spite of not having been smoked or char-grilled.

The invention relates to a cooked food that visually mimics smoked or char-grilled food in spite of not having been smoked or char-grilled, comprising a food substrate and a food coating composition applied to the surface of the food substrate, wherein
the food substrate is meat or seafood, and
the food coating composition comprises a cocoa powder having an L* of 35 or less and a powdery dispersion medium, wherein the cocoa powder is dispersed in the powdery dispersion medium.

The invention also relates to a method for producing a cooked food that visually mimics smoked or char-grilled food in spite of not having been smoked or char-grilled, comprising applying a food coating composition to a food substrate to form a coated food substrate and allowing the coated food substrate to cook, wherein
the food coating composition comprises a cocoa powder having an L* of 35 or less and a powdery dispersion medium, wherein the cocoa powder is dispersed in the powdery dispersion medium.

### Description of Embodiments

The invention will be described in detail. Unless specifically noted, the expression "A to B mass%" means a range of from A to B mass%, inclusive, and the same applies to numerical ranges in another unit.

The food coating composition used in the invention contains cocoa powder. Cocoa powder is the solids remaining after fatty component (cocoa butter) is extracted from ground cacao seeds (beans) and has the form of powder at room temperature and atmospheric pressure (specifically, at 25°C and 1 atm). It is typically produced by fermenting and roasting the cacao beans, removing the seed coat and germ, grinding the remaining solids to obtain cacao mass, pressing the cacao mass to separate cocoa butter, and pulverizing the resulting cocoa cakes to powder. The thus obtained cocoa powder still contains about 8 to 25 mass% of cocoa butter. Cocoa powder has different colors from brown to dark brown to black depending on the variety and production area of cacao, the degree of roasting or alkalization, and so on.

The cocoa powder that can be used in the invention has an L* of 35 or less. The L* value represents lightness of color in the CIELAB color space (also referred to as CIELAB L*a*b* color difference formula). The lightness value L* ranges from 0 to 100. A color when L*=0 is defined as black, and a color when L*=100 is defined as white. The color of a cocoa powder having an L* of 35 or less is black to dark brown. The cocoa powder with an L* of 35 or less will hereinafter be also called "blackish cocoa powder".

While cocoa powder is usually used for flavoring cocoa drinks and confectionery, it is used in the food coating composition with a view to imparting, to a food, an appearance characteristic of smoked or char-grilled food, specifically, a lightly browned, dark shaded appearance and/or a nicely browned appearance. To accomplish the purpose, the lightness value L* of the cocoa powder is set at 35 or less. Cocoa powder with an L* exceeding 35 is incapable of imparting the mimic smoked or char-grilled appearance to a non-smoked or non-char-grilled food. The L* of the cocoa powder is preferably 30 or less, more preferably 25 or less. The L* of cocoa powder can be measured with a spectrophotometric colorimeter.

In the CIELAB color space, a* indicates a red/green tone, b* indicates a blue-yellow tone, and L* indicates lightness. The CIELAB color space expresses color by the position in the three-dimensional space defined by L*a*b*. However, in the invention, it is unnecessary to consider the a* and b* of the cocoa powder, as long as the cocoa powder used is derived from cacao beans and has an L* of 35 or less.

The content of the blackish cocoa powder in the food coating composition is preferably 0.1 to 10 mass%, more preferably 0.3 to 7 mass%, even more preferably 0.6 to 4 mass%, relative to the entire mass of the food coating composition. If the blackish cocoa powder content is too low, the visual effect expected of the blackish cocoa powder, i.e., the effect of imparting the mimic smoked or char-grilled appearance, cannot be produced. On the contrary, if the content is too high, the food coating composition would impart too strong a blackish tone to a food, rather spoiling the original color tone of the food.

The food coating composition contains, in addition to the blackish cocoa powder, a powdery dispersion medium in which the cocoa power is dispersed. The above-discussed visual effect of the food coating composition is produced stably by uniformly applying the blackish cocoa powder to the surface of a food substrate. Nevertheless, it is not easy to uniformly apply the cocoa powder alone without the aid of a dispersion medium. For instance, if cocoa powder is sprinkled by hand over a food substrate, or if a food substrate is rolled in cocoa powder spread on a cutting board or other work surface, the cocoa powder will attach to the food substrate in the form of relatively large agglomerated lumps. Thus, the food to be obtained may have an unfavorable appearance with dark brown to black patches of cocoa powder. Otherwise, too much cocoa powder may attach to the food substrate and, thus, the surface of the resulting food can be blackened all over to have an unfavorable appearance. Since the food coating composition combines the blackish cocoa powder with a powdery dispersion medium for dispersing the cocoa powder, the blackish cocoa powder is prevented from agglomerating into lumps when applied to a food substrate and from unevenly attaching to the food substrate, whereby the expected visual effect is produced stably.

The powdery dispersion medium for use in the invention may be selected as appropriate to, for example, the type of the food from anything that is edible and in powder form at room temperature and atmospheric pressure. Examples of useful powdery dispersion media include cereal flours, such as wheat flour, corn flour, and rice flour; starches, such as native starch, modified starch, and starch decomposition products; baked cereal flours, such as breadcrumbs and crushed crackers; saccharides, such as monosaccharides and disaccharides; thickeners, such as gum and thickening polysaccharides; egg powders, such as whole egg powder and albumen powder; soybean-based powders, such as soybean powder and soybean protein; diet fiber; leavening agents; emulsifiers; edible salt; seasonings, such as powdered soy sauce, fermented seasonings, powdered *miso,* and amino acids; spices; flavors; nutrient ingredients, such as vitamins and minerals; colorings; powdered oil; and salts. These powdery dispersion media may be used either individually or in combination of two or more thereof according to the desired properties of the food.

The content of the powdery dispersion medium in the food coating composition is preferably 90 to 99.9 mass%, more preferably 93 to 99.7 mass%, even more preferably 96 to 99.4 mass%, relative to the entire mass of the composition.

Exemplary powdery dispersion media are those having a white to yellow color as a whole (as an assemblage of powder particles of the dispersion medium), more specifically those having an L* preferably of 85 or more, more preferably 90 to 99. The use of the powdery dispersion medium with such a color tone makes it possible to minimize the influence of the color of the powdery dispersion medium on the color of the blackish cocoa powder, thereby further ensuring the visual effect of the blackish cocoa powder in imparting an appearance like a smoked or char-grilled food.

Examples of powdery dispersion media having a white to yellow color as a whole include cereal flours, starches, and saccharides. When the food coating composition is required to have a minimal influence on the flavor of the food, it is advisable not to use saccharides, which have relatively large influences on the flavor, but to use cereal flours or starches, which have relatively small influences. The cereal flours include wheat flour, corn flour, rice flour, and barley flour, and the starches include corn starch, waxy corn starch, potato starch, sweet potato starch, wheat starch, tapioca starch, rice starch, and their modified products. The total content of cereal flours, starches, and saccharides used as a powdery dispersion medium in the food coating composition is preferably 50 to 99.9 mass%, more preferably 70 to 99 mass%, even more preferably 85 to 98 mass%, relative to the entire mass of the composition.

If desired, the food coating composition may further contain other optional ingredients in addition to the above essential ingredients, i.e., the blackish cocoa powder and powdery dispersion medium. Examples of other ingredients include flavors, seasonings, preservatives, and nutrients. However, the food coating composition typically consists of the blackish cocoa powder and the powdery dispersion medium. The food coating composition may be prepared by mixing the ingredients.

The food coating composition is applied (attached) to the surface of a food substrate when used. The food coating composition is applicable to a variety of food substrates, including meats, such as chicken, pork, beef, mutton, and chevon; seafoods, such as squids, shrimps, oysters, octopuses, and horse mackerels; and vegetables. The food substrate to which the food coating composition is attached may be raw or may have been allowed to cook. Considering that the main effect of the food coating composition is imparting a mimic smoked or char-grilled appearance, exemplary foods for which the food coating composition is used are those that undergo cooking involving heating but not involving smoking or char-grilling in its production process. That is, the food coating composition is suitable to the production of cooked foods that visually mimic smoked or char-grilled food in spite of not having been smoked or char-grilled.

The food coating composition is particularly useful in foods containing meat or seafood. The foods containing meat to which the food coating composition is applied are exemplified by cooked foods, including *karaage* chicken (Japanese style fried chicken), roast chicken, fried chicken, marinated fried food, skewered grilled chicken, grilled meat, skewered meat optionally with vegetables, beefsteaks, hams, sausages, breaded fried pork, breaded fried ham, and breaded fried chicken. The foods containing seafood to which the food coating composition is applied are exemplified by cooked foods, including breaded fried shrimps, *tempura,* flitters, popcorn shrimp, breaded fried oysters, floured fried squid, floured fried octopus, and marinated fried fishes.

The food coating composition may be attached to a food substrate as it is (in the form of powder) or in the form of batter prepared by dissolving or dispersing the composition in a liquid.

Application (attachment) of the food coating composition to a food substrate may be in any stage of food production, e.g., before or during cooking or after cooking and before eating, which can be chosen as appropriate to the shape of the food, cooking process, eating style, and others. Exemplary usages of the food coating composition i.e., embodiments of the method for producing processed foods involving the use of the food coating composition are shown below.

(1) The food coating composition is applied as it is (in the form of powder without mixing with any liquid) to a food substrate, and the coated food substrate is sautéd, grilled, or allowed to cook in a like way. The processed food produced in this way is exemplified by meat sauté.
(2) The food coating composition is applied as it is (in the form of powder without mixing with any liquid) to a food substrate, and the coated food is deep-fried. The processed food produced in this way is exemplified by floured fried meat, seafood, or vegetables.
(3) The food coating composition is applied as it is (in the form of powder without mixing with any liquid) to the surface of a cooked food. The processed food produced in this way is exemplified by french fries.
(4) The food coating composition is mixed with a liquid. The resulting mixture is applied to a food substrate, and the coated food substrate is deep-fried. The processed food produced in this way is exemplified by *tempura* of meat, seafood, or vegetables. In this case, the mixture of the food coating composition and the liquid is what is called a batter.
(5) The food coating composition is mixed with a liquid, and the resulting mixture is applied to the surface of a cooked food substrate. The processed food produced in this way is exemplified by candied sweet potato, which is made by using sweet potato fries as the cooked food substrate. The resulting candied sweet potato coated with the mixture may be cooled.

In view of fully exhibiting the intended effect of the food coating composition it is important for the blackish cocoa powder not to agglomerate on a food substrate to which it is attached. Taking this into account, the food coating composition is preferably used in a manner such that applying the composition to a food substrate is followed by allowing the resultant to cook as in the hereinafter described method for producing a processed food according to the invention. Of the above-described embodiments (1) to (5), the embodiments (1), (2) and (4) are preferred, in which applying the composition to a food substrate with is followed by allowing the resultant to cook.

The method for producing a processed food according to the invention (hereinafter simply referred to as the method of the invention) will then be described. The method of the invention includes applying the food coating composition to the surface of a food substrate (coating step) and allowing the coated food substrate to cook (cooking step).

In the coating step, the food coating composition is applied to the surface of a food substrate. Since the main effect of the food coating composition resides in a visual effect by imparting an appearance like smoked or char-grilled food, the food coating composition is preferably applied to at least the part of the food substrate that is visible to the naked eye in its natural state (the state of the food substrate with no external force applied thereto). For example, a food containing meat, such as a chicken thigh, may have a bent part or a folded part, and the surface of such a part is not visible to the naked eye in its natural state unless an external force, such as unfolding by the hand, is applied. The food coating composition may not be attached to the surface of such a part of the food substrate that is invisible without an external force. In other words, the food coating composition is preferably applied to at least the surface of the part of a food substrate that is visible to the naked eye in its natural state. The surface of the visible part of a food substrate will hereinafter be also called "a visible surface".

In view of fully exhibiting the visual effect of the food coating composition it is preferred that the blackish cocoa powder of the food coating composition be attached in a dispersed state to cover 0.1 to 10% of the total area of the visible surface of a food substrate when the food substrate having been coated with the food coating composition is observed by the naked eye. In the coating step, the food coating composition is preferably applied to the food substrate so as to achieve the above coating area ratio. As used herein, the term "attached in a dispersed state" means that the cocoa powder particles are attached to the surface of a food substrate without substantial agglomeration. More specifically, it means that the cocoa powder particles (inclusive of agglomerates of the particles, if any) covering 0.1 to 10% of the total area of the visible surface of a food substrate preferably have an average greatest diametrical length (typically an average particle size) of 1 mm or smaller, more preferably 0.7 mm or smaller. The cocoa powder particles used in the invention usually have an average particle size of about 5 to 30 µm in a non-agglomerated state.

In the coating step, the food coating composition may be applied to a food substrate as it is, i.e., in the form of powder. Alternatively, the food coating composition may be mixed with a liquid to be dissolved or dispersed therein, and the resulting mixture may be applied to a food substrate. For the latter case, examples of the liquid include water, milk, and egg wash, and these may be used either individually or in combination of two or more thereof. The amount of the liquid to be mixed with the food coating composition is preferably 50 to 300 parts by mass, more preferably 70 to 220 parts by mass, even more preferably 90 to 180 parts by mass, per 100 parts by mass of the food coating composition.

In the coating step, the amount of the food coating composition to be applied to the food substrate is preferably such that the cocoa powder of the composition is attached to the surface of the food substrate in an amount of 0.005 to 1 part by mass, more preferably 0.05 to 0.5 parts by mass, even more preferably 0.08 to 0.3 parts by mass, per 100 parts by mass of the food substrate. For instance, when the food coating composition that has a blackish cocoa powder content of 1 mass% is applied in an amount of 0.5 to 100 parts by mass per 100 parts by mass of a food substrate, the amount of the blackish cocoa powder attached to the surface of the food substrate is 0.005 to 1 part by mass per 100 parts by mass of the food substrate. If too little blackish cocoa powder is attached, the intended effect cannot be exhibited. On the contrary, if too much blackish cocoa powder is attached, the coated food will have too strong a blackish or near blackish tone, resulting in spoiling the original color tone of the food.

Before the coating step, the food substrate to be coated may previously be dressed for the purpose of, for example, seasoning beforehand. For example, a powder or liquid seasoning composition containing seasonings, herbs, spices, saccharides, amino acids, thickening polysaccharides, enzymes, and so on may be applied by sprinkling, spraying, dipping, or otherwise.

In the cooking step, the food substrate having been coated with the food coating composition is allowed to cook. Suitable cooking methods include frying, oven cooking, and steaming. These cooking methods may be used individually or in combination. Oven cooking is a cooking method using a known oven in a usual manner. Examples of useful ovens include toaster ovens, roaster ovens, steam ovens, jet ovens, and convection ovens. Steaming is a cooking method by, for example, heating a food in saturated steam for a predetermined time.

The method of the invention does not involve smoking or char-grilling since the method can impart the appearance as if smoked or char-grilled by using the food coating composition without conducting smoking or char-grilling. Smoking is the process of exposing food to smoke generated by heating a smoking material, such as wood chips. Char-grilling is the process of heating food over charcoal fire. Since the method of the invention can impart to a food an appearance as if smoked or char-grilled without involving smoking or char-grilling process, the method enables efficient production of foods that mimic smoked or char-grilled foods and is suitable for mass-production thereof.

Examples of the processed foods that are produced by the method of the invention include deep-fried foods, such as floured fried foods, fried chicken, and *tempura;* pan-fried foods or roasted food such as oven-roasted foods and steam-roasted foods (roasted with superheated steam); and steamed foods. Since the processed foods produced by the method of the invention have an appearance as if smoked or char-grilled despite not having been smoked or char-grilled, they may be labeled as "smoked food-like" or "char-grilled food-like" when it has really not smoked or char-grilled.

The processed food of the invention is suitably used as a food having been cooked but not having been smoked or char-grilled, or an intermediate of food of that type. As used herein, the term "intermediate of food" refers to an item that becomes a food as a finished item (product) after it undergoes at least one process step. In the case when the food (product) is *karaage* chicken, for instance, the intermediate may be a piece of chicken having a coating material attached to the surface thereof before being deep-fried, and the piece of chicken having a coating material may be either refrigerated or frozen.

### EXAMPLES

The invention will now be illustrated in greater detail with reference to Examples, but it should be understood that the invention is not construed as being limited thereto.

### Examples 1 and 2, Comparative Examples 1 to 3, and Reference Example

Materials including a colorant were mixed according to the mix ratio shown in Table 1 to prepare a coating (food coating composition) for deep-fried foods. In Table 1, the wheat flour is weak flour, and the starch is corn starch. The coating of Reference Example was prepared by dispersing colorant A directly in water.

The colorants used in the preparation of the coatings had the following L* values. The L* values were measured under the conditions below. The measurement of the L* was carried out in triplicate for each colorant, and the average of the three found values was reported as the L* of the colorant. The color tone of the colorant as a whole (as the assemblage of powder particles) as observed by the naked eye is indicated in parentheses in the following list.
- Colorant A: cocoa powder with an L* of 24.75 (black)
- Colorant B: cocoa powder with an L* of 33.46 (dark brown)
- Colorant C: cocoa powder with an L* of 39.02 (brown)
- Colorant D: cocoa powder with an L* of 43.06 (brown)
- Colorant E: caramel coloring with an L* of 31.55 (brown)

### Conditions for Measuring L*:

- Instrument: Spectrophotometer CM-5 (from Konica Minolta, Inc.)
- Main illuminant: D65
- Viewing angle: 10°
- Measurement mode: reflection
- Measurement diameter: 30 mm
- Specular component mode: SCI
- Geometry: di8°, de8°

### Examples 3 to 11 and Comparative Examples 4 to 6

Coatings for deep-fried food were prepared as food coating compositions in the same manner as in Example 1, except for changing the amount of colorant A as shown in Tables 2 to 4.

### Production Example 1 - Production of karaage chicken

*karaage* chicken (processed food) was made according to the following procedure using the coatings of Examples, Comparative Examples, and Reference Example. A hundred parts of the coating and 100 parts of water were mixed to prepare batter. Boneless chicken thighs were cut into 25 g pieces. After seasoning, the pieces were dipped in the batter to be each coated all over with 2.5 g of the batter. The coated chicken pieces were deep-fried in oil at 175°C for 1 minute and further heated in a steam oven at 140°C until the central temperature of each piece reached 80°C to make *karaage* chicken. After being cooled down, the *karaage* chicken was frozen.

### Production Example 2 - Production of roasted chicken pieces

Roasted chicken pieces (processed food) were made according to the following procedure using the coatings of Examples, Comparative Examples, and Reference Example. A hundred parts of the coating and 100 parts of water were mixed to prepare batter. Chicken thighs were cut into 25 g pieces. After seasoning, the pieces were dipped in the batter to be each coated all over with 2.5 g of the batter. The coated chicken pieces were allowed to cook in an over at 200°C until the central temperature of each piece reached 80°C to make roasted chicken pieces. After being cooled down, the roasted chicken pieces were frozen.

### Production Example 3 - Production of fried shrimp

Fried shrimp (processed food) was made according to the following procedure using the coatings of Examples and Comparative Examples. A hundred parts of the coating and 160 parts of water were mixed to prepare batter. Shrimps (size: 21-25) were dipped in the batter to be each coated all over with 10 g of the batter. The coated shrimps were deep-fried in oil at 170°C for 2.5 minutes to make fried shrimp.

### Test Example

The appearance of the thus produced processed foods (*karaage* chicken, roasted chicken pieces, and fried shrimp) was visually evaluated by a panel of 10 experts and rated according to the following scoring scale. The frozen *karaage* chicken and the frozen roasted chicken pieces were thawed in the microwave to be evaluated. Fried shrimp was evaluated after producing and cooling down. The average of the scores given by the panel is shown in Tables 1 to 4. In Tables, all the parts and percentages are by mass, and "bal." means balance.

### Scoring scale for appearance:

5: Very good, with a blackish tone all over the surface.
4: Good, with a blackish to dark brownish tone all over the surface.
3: Fair, with a slightly uneven blackish to dark brownish tone over the surface.
2: Bad, with an uneven blackish to dark brownish tone over the surface or much mottled with a blackish tone over the surface.
1: Very bad, with a considerably uneven blackish to dark brownish tone over the surface or very much mottled with a blackish tone over the surface.

**Table 1**

| | | Example | | Comp. Example | | | Ref. Example |
|---|---|---|---|---|---|---|---|
| | | 1 | 2 | 1 | 2 | 3 | |
| Coating (Food Coating Composition) | Colorant A | 2 | - | - | - | - | 2 |
| | Colorant B | - | 2 | - | - | - | - |
| | Colorant C | - | - | 2 | - | - | - |
| | Colorant D | - | - | - | 2 | - | - |
| | Colorant E | - | - | - | - | 2 | - |
| | Wheat Flour | 10 | 10 | 10 | 10 | 10 | - |
| | Starch | bal. | bal. | bal. | bal. | bal. | - |
| | Total (%) | 100 | 100 | 100 | 100 | 100 | 2 |
| Amount of Water Added (part/100 parts of Coating) | | 100 | 100 | 100 | 100 | 100 | 100 |
| Amount of Batter Attached (part/100 parts of food substrate) | | 10 | 10 | 10 | 10 | 10 | 10 |
| Amount of Colorant Attached (part/100 parts of food substrate) | | 0.1 | 0.1 | 0.1 | 0.1 | 0.1 | 0.1 |
| Appearance of *karaage* Chicken (5-point scale) | | 4.6 | 4.0 | 2.3 | 1.6 | 1.7 | 2.8 |

**Table 2**

| | | Example | | | | | | | |
|---|---|---|---|---|---|---|---|---|---|
| | | 3 | 4 | 5 | 1 | 6 | 7 | 8 | 9 |
| Coating (Food Coating Composition) | Colorant A | 0.6 | 1 | 1.6 | 2 | 6 | 10 | 10 | 10 |
| | Wheat Flour | 10 | 10 | 10 | 10 | 10 | 10 | 10 | 10 |
| | Starch | bal. | bal. | bal. | bal. | bal. | bal. | bal. | bal. |
| | Total (%) | 100 | 100 | 100 | 100 | 100 | 100 | 100 | 100 |
| Amount of Water Added (part/100 parts of Coating) | | 100 | 100 | 100 | 100 | 100 | 100 | 100 | 100 |
| Amount of Batter Attached (part/100 parts of food substrate) | | 10 | 10 | 10 | 10 | 10 | 10 | 20 | 40 |
| Amount of Colorant Attached (part/100 parts of food substrate) | | 0.03 | 0.05 | 0.08 | 0.1 | 0.3 | 0.5 | 1 | 2 |
| Appearance of *karaage* Chicken (5-point scale) | | 3.5 | 4.0 | 4.3 | 4.6 | 4.4 | 4.2 | 3.8 | 3.0 |

**Table 3**

| | | Example | | Comp. Example | | | Ref. Example |
|---|---|---|---|---|---|---|---|
| | | 1 | 2 | 1 | 2 | 3 | |
| Coating (Food Coating Composition) | Colorant A | 2 | - | - | - | - | 2 |
| | Colorant B | - | 2 | - | - | - | - |
| | Colorant C | - | - | 2 | - | - | - |
| | Colorant D | - | - | - | 2 | - | - |
| | Colorant E | - | - | - | - | 2 | - |
| | Wheat Flour | 10 | 10 | 10 | 10 | 10 | - |
| | Starch | bal. | bal. | bal. | bal. | bal. | - |
| | \| Total (%) | 100 | 100 | 100 | 100 | 100 | 2 |
| Amount of Water Added (part/100 parts of Coating) | | 100 | 100 | 100 | 100 | 100 | 100 |
| Amount of Batter Attached (part/100 parts of food substrate) | | 10 | 10 | 10 | 10 | 10 | 10 |
| Amount of Colorant Attached (part/100 parts of food substrate) | | 0.1 | 0.1 | 0.1 | 0.1 | 0.1 | 0.1 |
| Appearance of Roasted Chicken (5-point scale) | | 4.5 | 4.1 | 2.1 | 1.5 | 1.6 | 2.6 |

**Table 4**

| | | Example | | Comp. Example | | |
|---|---|---|---|---|---|---|
| | | 10 | 11 | 4 | 5 | 6 |
| Coating (Food Coating Composition) | Colorant A | 5 | - | - | - | - |
| | Colorant B | - | 5 | - | - | - |
| | Colorant C | - | - | 5 | - | - |
| | Colorant D | - | - | - | 5- | - |
| | Colorant E | - | - | - | - | 5 |
| | Wheat Flour | bal. | bal. | bal. | bal. | bal. |
| | Starch | 5 | 5 | 5 | 5 | 5 |
| | Baking Powder | 1 | 1 | 1 | 1 | 1 |
| | \| Total (%) | 100 | 100 | 100 | 100 | 100 |
| Amount of Water Added (part/100 parts of Coating) | | 160 | 160 | 160 | 160 | 160 |
| Amount of Batter Attached (part/100 parts of food substrate) | | 25 | 25 | 25 | 25 | 25 |
| Amount of Colorant Attached (part/100 parts of food substrate) | | 0.48 | 0.48 | 0.48 | 0.48 | 0.48 |
| Appearance of Fried Shrimp (5-point scale) | | 4.9 | 4.5 | 2.4 | 1.9 | 2.2 |

As shown in Table 1, since the coatings (food coating compositions) of Examples contain colorant A or B, i.e., a cocoa powder with an L* of 35 or less, and wheat flour as a powdery medium for dispersing the colorant, they provide *karaage* chicken having a better appearance than the coatings of Comparative Example and Reference Example, which do not satisfy the above requirement. Similar results were obtained in the production of roasted chicken pieces (see Table 3) and fried shrimp (see Table 4). That is, the processed foods produced using the coatings of Examples had an appearance as if smoked or char-grilled despite not having been smoked or char-grilled.

A suitable range of the content of the cocoa powder with an L* of 35 or less in the food coating composition can be seen from the comparison between Examples 1 and 3 to 7 in Table 2. A suitable range of the amount of the cocoa powder with an L* of 35 or less to be attached per 100 parts by mass of a food substrate can be seen from the comparison between Examples 7 to 9 in Table 2.

### Industrial Applicability

The food coating composition used in the invention is capable of imparting to a food an appearance characteristic of smoked food or char-grilled food without involving smoking or char-grilling process. Therefore, the food coating composition enables efficient production of processed foods featuring an appearance as if smoked or char-grilled without performing a time-consuming smoking process or a char-grilling process having difficulty in adjusting the doneness on fire.

## Claims

1. A cooked food that visually mimics smoked or char-grilled food in spite of not having been smoked or char-grilled, comprising a food substrate and a food coating composition applied to the surface of the food substrate, wherein
the food substrate is meat or seafood, and
the food coating composition comprises a cocoa powder having an L* of 35 or less and a powdery dispersion medium, wherein the cocoa powder is dispersed in the powdery dispersion medium.

2. The cooked food that visually mimics smoked or char-grilled food according to claim 1, wherein the cooked food is a deep-fried food.

3. A method for producing a cooked food that visually mimics smoked or char-grilled food in spite of not having been smoked or char-grilled, comprising applying a food coating composition to a food substrate to form a coated food substrate and allowing the coated food substrate to cook, wherein
the food coating composition comprises a cocoa powder having an L* of 35 or less and a powdery dispersion medium, wherein the cocoa powder is dispersed in the powdery dispersion medium.

4. The method according to claim 3, wherein allowing the coated food substrate to cook is by at least one of frying, oven cooking, and steaming.

## Patentansprüche

1. Gekochtes Lebensmittel, das visuell geräucherte oder mit Holzkohle gegrillte Lebensmittel imitiert, obwohl es nicht geräuchert oder mit Holzkohle gegrillt wurde, umfassend ein Lebensmittelsubstrat und eine auf die Oberfläche des Lebensmittelsubstrats aufgebrachte Lebensmittelbeschichtungszusammensetzung, wobei
das Lebensmittelsubstrat Fleisch oder Meeresfrüchte ist und
die Lebensmittelbeschichtungszusammensetzung ein Kakaopulver mit einem L* von 35 oder weniger und ein pulverförmiges Dispersionsmedium umfasst, wobei das Kakaopulver in dem pulverförmigen Dispersionsmedium dispergiert ist.

2. Gekochtes Lebensmittel, das visuell geräucherte oder mit Holzkohle gegrillte Lebensmittel imitiert nach Anspruch 1, wobei das gekochte Lebensmittel ein frittiertes Lebensmittel ist.

3. Verfahren zur Herstellung eines gekochten Lebensmittels, das visuell geräucherte oder mit Holzkohle gegrillte Lebensmittel imitiert, obwohl es nicht geräuchert oder mit Holzkohle gegrillt wurde, umfassend das Auftragen einer Lebensmittelbeschichtungszusammensetzung auf ein Lebensmittelsubstrat, um ein beschichtetes Lebensmittelsubstrat zu bilden, und garen lassen des beschichteten Lebensmittelsubstrats, wobei
die Lebensmittelbeschichtungszusammensetzung ein Kakaopulver mit einem L* von 35 oder weniger und ein pulverförmiges Dispersionsmedium umfasst, wobei das Kakaopulver in dem pulverförmigen Dispersionsmedium dispergiert ist.

4. Verfahren nach Anspruch 3, bei dem man das beschichtete Lebensmittelsubstrat durch mindestens eines der folgenden Verfahren garen lassen kann: Braten, Garen im Ofen und Dämpfen.

## Revendications

1. Aliment cuit qui imite visuellement un aliment fumé ou grillé au charbon de bois bien qu'il n'ait pas été fumé ou grillé au charbon de bois, comprenant un substrat alimentaire et une composition de revêtement alimentaire appliquée à la surface du substrat alimentaire, dans laquelle
le substrat alimentaire est de la viande ou des fruits de mer, et
la composition de revêtement alimentaire comprend une poudre de cacao ayant un L* de 35 ou moins et un milieu de dispersion poudreux, la poudre de cacao étant dispersée dans le milieu de dispersion poudreux.

2. Aliment cuit qui imite visuellement un aliment fumé ou grillé au charbon de bois selon la revendication 1, dans lequel l'aliment cuit est un aliment frit.

3. Méthode de production d'un aliment cuit qui imite visuellement un aliment fumé ou grillé au charbon de bois bien qu'il n'ait pas été fumé ou grillé au charbon de bois, comprenant l'application d'une composition de revêtement alimentaire à un substrat alimentaire pour former un substrat alimentaire de revêtement et permettant la cuisson du substrat de revêtement alimentaire, dans laquelle
la composition de revêtement alimentaire comprend une poudre de cacao ayant un L* de 35 ou moins et un milieu de dispersion pulvérulent, la poudre de cacao étant dispersée dans le milieu de dispersion pulvérulent.

4. Méthode selon la revendication 3, dans laquelle la cuisson du substrat alimentaire de revêtement s'effectue par au moins l'une des méthodes suivantes: friture, cuisson au four et cuisson à la vapeur.
